# EUROPEAN PATENT APPLICATION

(11) **EP 1 339 146 A1**
(43) Date of publication of application: **27.08.2003**
(21) Application number: 02425745.3
(22) Date of filing: 04.12.2002
(51) Int. Cl.: H02G 1/08, G02B 6/44

(54) **Method and apparatus for laying a cable, particularly an optical fibre cable, within a guide tube, by means of a pressurised hydraulic fluid, possibly an emulsified liquid with a part of antifriction liquid, and by means of supplementary dragging force**

(30) Priority: 20.02.2002 IT RM20020093
(71) Applicant: FIBOT HOLDING LTD., Pieta'MSD - Malta (MT)
(72) Inventor:
(74) Representative: Iannone, Carlo Luigi

(57) **Abstract**

The invention relates to a method for laying a cable by a pressurised hydraulic fluid, by a supplementary dragging force, comprising the steps of:
- providing first a guide tube along all the path where the cable must be laid;
- introducing an optical fibre cable within one end of said guide tube;
- transporting the optical fibre cable by a pressurised hydraulic fluid up to the other end of the guide tube,
said method further comprising the following step, carried out before the introduction of the optical fibre cable within the guide tube:
- realising on the surface of the optical fibre cable zone exceeding the transverse section of the same cable.

## Description

The present invention relates to a method and apparatus for laying a cable, particularly an optical fibre cable, within a guide tube, by means of a pressurised hydraulic fluid, possibly an emulsified liquid with a part of antifriction liquid, and by means of a supplementary dragging force.

Usually, the operation of laying underground cables, mainly with the always more spread use of optical fibre cables, is carried out by the putting first underground empty guide tubes, within which cables are passed, when necessary.

This technique allows to avoid subsequent and repeated digging operations to introduce new cables, since it is sufficient make them passing through the already underground guide tubes. The traditional technique for laying cables within guide tubes provides that said cables are inserted within the tubes and pulled from one end by a pulling rope. This operation involves the application of high forces on the cable, said force exponentially increasing with the length of the path and are further increased due to the presence along the path of curves and elbows.

An important innovation has been introduced by the Italian Patent N° 1,244.964, filed in the name of C.I.S. Sud, describing a method and the relevant apparatus for laying cables within guide tubes by a pressurised hydraulic fluid.

Subsequently, said apparatus has been improved, said improvement being described in the Italian Utility Model N° 227,223, always in the name of C.I.S. Sud, suggesting a solution modified in the shape, combination and disposition of its parts, to obtain the method to realise a movable and particularly compact apparatus.

Further improvements have been introduced and described in Italian Utility Model N° RM2002U000044 and N° RM2001U000119, in the name of Fibot Holding, said solutions avoiding the serious damages and repeated drawbacks encountered in the practical use of the apparatus, particularly due to the housing and sliding elements for the cable, to the shape of the venturimeter and to the features of the movable container, on which the cable recovery reel is mounted.

However, notwithstanding the improved system, in some particular cases still exist difficulties relevant to the laying of the cable all along its size length.

Particularly, main reasons of these difficulties are due to the kind of cable and to the laying path particularly difficult.

The used cable can, for example, have a high specific weight, thus reducing the efficiency of the floating action of the same in the hydraulic fluid; further it can comprise an outer sheath, that for possible contacts with the outer surface of the tube creates an excessive friction coefficient.

Furthermore, laying path can be very complicated and it can include ascents and changes of direction that would require, for a regular laying, high fluid pressures, not allowed for the functional safety of the pipeline.

The object of the present invention is therefore that of realising a system allowing to obtain a supplementary dragging force sufficient to obtain a regular laying even in very difficult conditions.

It is therefore specific object of the present invention a method for laying a cable by a pressurised hydraulic fluid, by a supplementary dragging force, comprising the steps of:
- providing first a guide tube along all the path where the cable must be laid;
- introducing an optical fibre cable within one end of said guide tube;
- transporting the optical fibre cable by a pressurised hydraulic fluid up to the other end of the guide tube,
said method further comprising the following step, carried out before the introduction of the optical fibre cable within the guide tube:
- realising on the surface of the optical fibre cable zone exceeding the transverse section of the same cable.

As an alternative, according to the invention, said zone exceeding the transverse section are separated each other, or they are realised by a single spiral continuous relief along the extension of the cable.

Preferably, according to the invention, disposition of said cable exceeding zones can be modified in function of the difficulties met during the laying operations.

It is further a second specific object of the present invention an apparatus for laying a cable by a pressurised hydraulic fluid, by a supplementary dragging force, comprising means for introducing and dragging the cable within a guide tube by a pressurised hydraulic fluid, said means being provided with a hole for the introduction of the cable, and with one or more holes for the introduction of the dragging fluid, and with an hole for the exit and the introduction of the cable and of the dragging fluid within the guide tube, cable recovery means, means for conveying the cable from its recovery means toward said introduction and dragging means, said apparatus further comprising means for placing on the cable elements able to realise on its surface zones exceeding the transverse section of the same cable.

Preferably, according to the invention, said means for placing on the cable the elements able to realise on its surface zones exceeding the transverse section of the same cable are automatic positioning means, able to perform their function during the laying of the cable without influencing the prosecution of the laying operation by slowering or stopping the same operations.

According to the present invention, said elements able to realise on its surface zones exceeding the transverse section of the same cable can be comprised of rings placed on the cable, spaced each other at a distance that can be adjusted in function of the difficulties met during the laying operations.

According to the invention, said automatic positioning means comprise a system for positioning elastic rings, sealing placed between said introduction and dragging means and said guide tube, provided with a housing chamber for the enlarged elastic rings, said rings being placed in such a way that the cable passes within the same rings, comprising means to releasing, one by one, said rings from said housing chamber, and make them tightening about the cable.

Preferably, according to the invention, said means for releasing said rings from said housing chamber comprise a pneumatic apparatus pushing the rings toward the exit of the chamber by a pneumatic impulse transmitted to the chamber by one or more ducts.

As an alternative, according to the invention, said elements able to realise on its surface zones exceeding the transverse section of the same cable can be comprised of rings placed on the cable can comprise a continuous wire, spirally wound all along the length of the cable and fixed to the head of the cable by a heat-shrinking cap, the distance between the spire created winding the wire about the cable being adjustable in function of the difficulties encountered during the laying operation.

In this case, always according to the invention, said automatic positioning means comprise a spiral winding system of the continuous wire about the cable, sealing placed between said introduction and dragging means and said guide tube, said system comprising a main body, rotating about the cable during its winding and provided with a cable entrance and a cable outlet and with a lateral inlet for the wire, said wire being unwound from a recovery support.

Preferably, according to the invention, the sealing of the winding system is ensured by stuffing box or by O-rings, or by both.

Finally, always according to the present invention, said pressurised hydraulic fluid can be emulsionated by adding an antifriction lubricant.

It is well evident the efficiency of the method and of the apparatus according to the present invention, allowing to obtain a supplementary dragging force realised by an elementary thrust that can be concentrated on more than one zone of the cable, or continuously all along the cable, thus preventing too high pressure values for the dragging fluid and at the same time to distribute the supplementary stress on the whole surface of the cable.

The present invention will be now described, for illustrative but not limitative purposes, according to its preferred embodiments, with particular reference to the figures of the enclosed drawings, wherein:
figure 1 shows a longitudinal section of a portion of the cable on which two rings are provided;
figure 2 shows a particular of the section of figure 1, according to lines B-B, where also the fluid lines are represented;
figure 3 shows a transverse section of the cable and of the ring of figure 1, according to line A-A;
figure 4 shows a schematic section view of the ring positioning system;
figure 5 shows a longitudinal view of a portion of a cable about which a wire is spirally wound;
figure 6 shows a particular of the section of figure 1, according to lines B-B, wherein the fluid lines are represented, and
figure 7 shows a schematic section view of the spiral winding system of the wire about the cable.

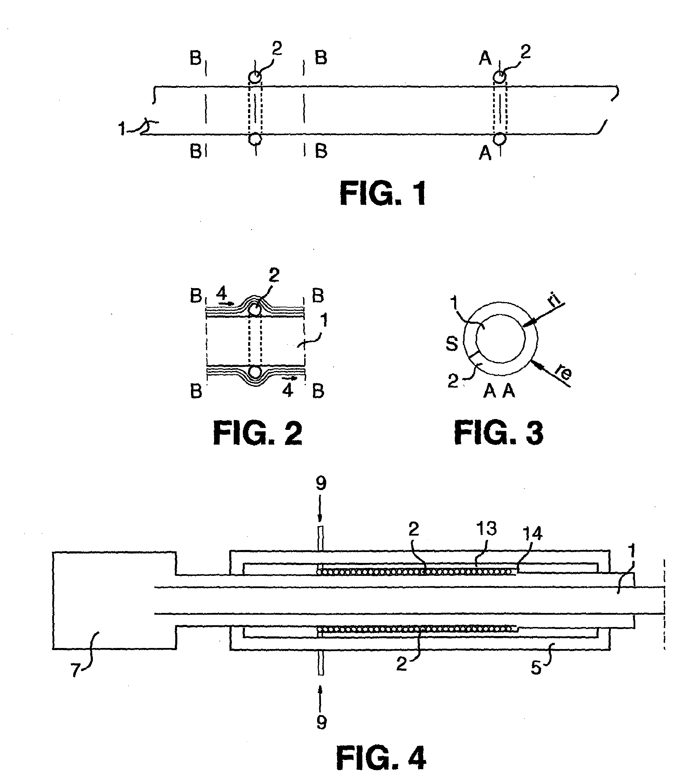

Making first reference to figure 1, it is shown a portion of a cable 1 on which two rings 2 are placed, according to a first embodiment of the present invention.

Figure 2 shows how the fluid lines 4 of the laminar motion of the fluid on the cable 1 surface are deviated by the presence of the ring 2, this involving an increase of the dragging action of the fluid.

Figure 3 shows a section of the cable 1 and of the ring 2, wherein the outer ray re, the inner ray ri and the thickness s of the ring are indicated. Particularly, inner ray of the ring coincides with the ray of the cable, since ring 2 is elastic and tightens about cable 1.

Thickness of the ring directly influences the supplementary dragging force created by the same. Said supplementary dragging force is in fact proportional to the surface of the circular crown of the ring and to the hydraulic fluid flow rate, while it is inversely proportional to the distance between the different rings.

By varying the thickness of the rings, or more simply their distance, the supplementary dragging effect can be modified according to the specific needing.

Making reference to figure 4, the positioning system 5 for the elastic rings 2 is sealing placed between the hydraulic fluid laying apparatus 7 and the guide tube. Within the positioning system, about the cable 1, a chamber 13 is provided within which the enlarged elastic rings 2 are housed; while the cable 1 passes through the chamber, within the same rings, placed at adjustable intervals, within the chamber 13 a pneumatic pulse is generated through the ducts 9, pushing the whole group of rings toward the outlet 14 of the chamber 13. Properly adjusting the pulse, only one ring each time is ejected from the chamber 13, tightening about the cable 1.

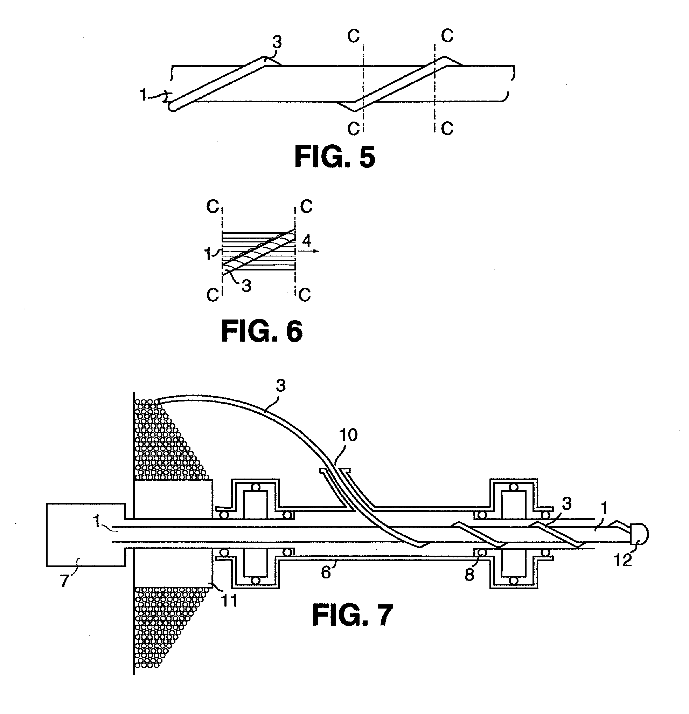

Figure 5 shows an alternative embodiment, where a wire 3 is spiral wound about the cable 1, in this way realising a continuous thickness, thus distributing to the whole cable a supplementary dragging force, not being any more present a concentration of the stresses only in correspondence of the rings.

The supplementary dragging effect obtained by this embodiment is even higher than that obtained by the rings. In this second case too is possible to modify the supplementary dragging force, bearing in mind that the thrust will be inversely proportional to the distance between the spire.

Consequently, to increase the supplementary dragging effect, it will be sufficient to make that the wire 3is sound about the cable 1 in such a way the spire are closer each other.

Figure 6 shows how the fluid lines are deviated in this second case.

Finally, making reference to figure 7, the spiral winding system of the continuous wire 3 about the cable 1 is sealing placed between the hydraulic fluid cable laying apparatus 7 and the guide tube 15. It is shown the main body 6, that can be rotated about the cable 1 during its winding, varying its speed to adjust the distance between the spire. Main body 6 is provided with a cable inlet, with a cable outlet and with a lateral inlet 10 for the wire. Said wire, wound about the recovery support 11, is first fixed to the cable head by the heat-shrinking cap 12, said cap closing the same cable; it is unwound from the support 11 during it winding about the cable.

Sealing is ensured by stuffing box or sealing O-rings 8.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for laying a cable by a pressurised hydraulic fluid, by a supplementary dragging force, comprising the steps of:
- providing first a guide tube along all the path where the cable must be laid;
- introducing an optical fibre cable within one end of said guide tube;
- transporting the optical fibre cable by a pressurised hydraulic fluid up to the other end of the guide tube,
**characterised in that** said method further comprises the following step, carried out before the introduction of the optical fibre cable within the guide tube:
- realising on the surface of the optical fibre cable zone exceeding the transverse section of the same cable.

2. Method for laying a cable by a pressurised hydraulic fluid according to claim 1, **characterised in that** further provides the step of:
- emulsionating the hydraulic fluid by an antifriction lubricant.

3. Method for laying a cable by a pressurised hydraulic fluid according to one of the claims 1 or 2, **characterised in that** said zone exceeding the transverse section are separated each other.

4. Method for laying a cable by a pressurised hydraulic fluid according to one of the claims 1 or 2, **characterised in that** said zone exceeding the transverse section are realised by a single spiral continuous relief along the extension of the cable.

5. Method for laying a cable by a pressurised hydraulic fluid according to one of the claims 1 - 4, **characterised in that** disposition of said cable exceeding zones can be modified in function of the difficulties met during the laying operations.

6. Apparatus for laying a cable by a pressurised hydraulic fluid, by a supplementary dragging force, comprising means for introducing and dragging the cable within a guide tube by a pressurised hydraulic fluid, said means being provided with a hole for the introduction of the cable, and with one or more holes for the introduction of the dragging fluid, and with an hole for the exit and the introduction of the cable and of the dragging fluid within the guide tube, cable recovery means, means for conveying the cable from its recovery means toward said introduction and dragging means, said apparatus further comprising means for placing on the cable elements able to realise on its surface zones exceeding the transverse section of the same cable.

7. Apparatus for laying a cable by a pressurised hydraulic fluid according to claim 6, **characterised in that** said means for placing on the cable the elements able to realise on its surface zones exceeding the transverse section of the same cable are automatic positioning means, able to perform their function during the laying of the cable without influencing the prosecution of the laying operation by slowering or stopping the same operations.

8. Apparatus for laying a cable by a pressurised hydraulic fluid according to one of the preceding claims 6 - 7, **characterised in that** said elements able to realise on its surface zones exceeding the transverse section of the same cable are comprised of rings placed on the cable, spaced each other.

9. Apparatus for laying a cable by a pressurised hydraulic fluid according to claim 8, **characterised in that** said rings are placed on the cable at a distance that can be adjusted in function of the difficulties met during the laying operations.

10. Apparatus for laying a cable by a pressurised hydraulic fluid according to one of the preceding claims 6 - 9, **characterised in that** said automatic positioning means comprise a system (5) for positioning elastic rings (2), sealing placed between said introduction and dragging means (7) and said guide tube, provided with a housing chamber (13) for the enlarged elastic rings, said rings being placed in such a way that the cable (1) passes within the same rings, comprising means to releasing, one by one, said rings from said housing chamber, and make them tightening about the cable.

11. Apparatus for laying a cable by a pressurised hydraulic fluid according to claim 11, **characterised in that** said means for releasing said rings from said housing chamber (13) comprise a pneumatic apparatus pushing the rings toward the exit (14) of the chamber by a pneumatic impulse transmitted to the chamber by one or more ducts (9).

12. Apparatus for laying a cable by a pressurised hydraulic fluid according to one of the preceding claims 6 - 7, **characterised in that** said elements able to realise on its surface zones exceeding the transverse section of the same cable can be comprised of rings placed on the cable can comprise a continuous wire (3), spirally wound all along the length of the cable (1) and fixed to the head of the cable by a heat-shrinking cap (12).

13. Apparatus for laying a cable by a pressurised hydraulic fluid according claim 12, **characterised in that** the distance between the spire created winding the wire (3) about the cable (1) is adjustable in function of the difficulties encountered during the laying operation.

14. Apparatus for laying a cable by a pressurised hydraulic fluid according to one of the preceding claims 6 - 7 and 13, **characterised in that** said automatic positioning means comprise a spiral winding system of the continuous wire (3) about the cable (1), sealing placed between said introduction and dragging means (7) and said guide tube (15), said system comprising a main body (6), rotating about the cable (1) during its winding and provided with a cable entrance and a cable outlet and with a lateral inlet (10) for the wire (3), said wire being unwound from a recovery support (11).

15. Apparatus for laying a cable by a pressurised hydraulic fluid according claim 14, **characterised in that** the sealing of the winding system is ensured by stuffing box or by O-rings, or by both.

16. Apparatus for laying a cable by a pressurised hydraulic fluid according to one of the preceding claims 6 - 15, **characterised in that** said pressurised hydraulic fluid is emulsionated by adding an antifriction lubricant.
